# EUROPEAN PATENT APPLICATION

(11) **EP 1 998 269 A1**
(43) Date of publication of application: **03.12.2008**
(21) Application number: 07708416.8
(22) Date of filing: 19.02.2007
(51) Int. Cl.: G06F 21/20, G06F 21/22

(54) **PROGRAM EXECUTION CONTROL SYSTEM, EXECUTION CONTROL METHOD, EXECUTION CONTROL COMPUTER PROGRAM**

(30) Priority: 21.02.2006 JP 2006044053
(71) Applicant: NEC Corporation, Minato-ku Tokyo 108-8001 (JP)
(72) Inventor: IGA, Norihisa, Tokyo 108-8001 (JP)
(74) Representative: Glawe, Ulrich
(86) International application number: PCT/JP2007/053451
(87) International publication number: WO 2007/097439

(57) **Abstract**

When a program is introduced into a computer terminal from an external source via a wired or wireless network or by using an external memory card, unauthorized access by the introduced program to various functions within the terminal is prevented by verifying the source from which the program was distributed and performing execution control appropriately according to the identity of the program. In order to reference the security policy data which specifies functions available to each program given from an external source and restrict functions used by the program, the information concerning the security domain or the certificate or signature attached to the program is extracted, and the extracted information is associated with one of a plurality of function access types held as security policy data.

## Description

### TECHNICAL FIELD

The present invention relates to a program execution control system, a program execution control method and a computer program for program execution control. More particularly, the invention relates to a program execution control system, a program execution control method and a computer program for program execution control which enable a user to execute an application or other program while protecting the system and data stored in an information communication terminal, such as a mobile terminal.

### BACKGROUND ART

When an information communication terminal, e.g. a mobile terminal, captures an application program, device driver or library or other item from an external source via a wired or wireless network, there is a fear that the security of the information communication terminal may be compromised due to the vicious operation of the captured program or other unexpected reasons. For example, the data stored in the information communication terminal may be subjected to unauthorized access, or the operational stability of the system in the terminal may be decreased. In order to prevent such security risks, an execution control technique is required which can authenticate the source from which a program or other item has been distributed, verify if the program has been altered during the delivery process and restrict access by the program to the system and resources within the communication terminal. This kind of execution control technique is also required when an application program or other item is captured from an external memory card inserted by the user to a communication terminal.

A typical execution control technique according to related arts will be explained briefly below.

Literature 1 describes SELinux (Security-Enhanced Linux), which enhances the security of Linux (registered trademark) systems. When SELinux is installed in a communication terminal or computer terminal, the SELinux module is incorporated into the Linux kernel and, consequently, a security policy file (configuration file) and SELinux extended commands are added. A security administrator can then perform administration tasks for SELinux by executing the SELinux extended commands to view or make changes to the security policy file.

Literature 2 describes Java Security, which enhances the security of class files (intermediate codes independent of the CPU architecture) running on a JVM (Java Virtual Machine). On a communication terminal or computer terminal in which a JVM with Java Security has been implemented, a security policy for the runtime behavior of class files can be set up. On such a terminal, security is ensured by applying the security policy to a JAR file which contains a certificate and a plurality of class files when it is captured to the JVM.

According to the execution control system described in Literature 3, the API (Application Program Interface) consists of a high-level API and a low-level API, and includes a trust determination unit and a safety degree evaluation unit. The high-level API determines whether or not the application program by which it has been invoked has a certificate. If the application program has a certificate and the certificate is correct, the high-level API invokes the low-level API to execute the requested function. Permission to invoke the low-level API is made by using a table which contains associations between code creator information within certificates and functions permitted to these codes. Instead of using a table, permitted functions may be indicated on a certificate itself. In case that the application program does not have any certificate or that the certificate held by the application program is not correct, a safety degree evaluation process is performed to determine the degree of safety of executing the requested function. If the evaluation result shows that it is safe to execute the requested function, the low-level API is invoked.

According to the execution control system described in Literature 4, the TRM (Tamper Resistant Module) part provided in the authentication module holds the information for use in authentication of application programs in its tamper-proof area. Using this information, an application program downloaded to the download part of the terminal is authenticated to verify the source of the application program, whether or not the application program has been altered and so forth. By permitting only authenticated application programs to use the local resources in the terminal, unauthorized application programs can be prevented from using the local resources.

According to the execution control system described in Literature 5, when the execution control system detects the activation of an application program, it suspends the request to use a resource issued by the activated application program and, during that time, it verifies whether or not the activated application program is a normal program. The suspended processing request is permitted only if the program has been verified to be a normal program.

Literature 6 discloses a control system for safely executing software obtained from an untrusted source via a network, etc. According to Literature 6, the control system extracts the signature part from the signed content. Based on the extracted signature, it then extracts the confidence certificate with regard to the content of the software, along with the resource requirement for using such content. Furthermore, the control system uses the confidence certificate to verify the trustworthiness and safety of the signed content. If the signed content is questionable in terms of either trustworthiness or safety, it performs a corrective action on the software.

Literature 7 discloses a content provision technique which eliminates the necessity to register with a content provider in advance every time a purchaser wants to purchase software from the content provider via a communication network. In this technique, "access conditions for receiving the provision of a content" are previously determined for each software. After a user purchases a record medium for a software content, the user accesses the content provider (i.e. the content server) to receive the provision of the content. At this time, a determination is made as to whether the user meets the access conditions mentioned above, based on the software type assigned to the purchased software and the ID presented for identification during the first access. The content is provided to the user only if the access conditions have been met.
Literature 1: "SELinux Tettei Gaido" (SELinux Comprehensive Guide) by Yuichi Nakamura, Tomohiro Mizukami and Shuichi Ueno, Business Publications Inc. (Nikkei BP), March 2004, pp. 24 to 41 and pp. 87 to 89)
Literature 2: "Java2 Platform Security" (authored by Li Gong and translated by Akio Shimada, Hiroaki Hata and Takashi Kawakami, Pearson Education Japan KK, pp. 41 to 48) (Java is a registered trademark)
Literature 3: Japanese Patent Laying-Open No. 2002-351563
Literature 4: Japanese Patent Laying-Open No. 2003-223235
Literature 5: Japanese Patent Laying-Open No. 2003-108253
Literature 6: Japanese Patent Laying-Open No. 1998-91427
Literature 7: Japanese Patent Laying-Open No. 2002-41366

In Literature 1, when a new application program is added, it is necessary to update the existing security policy database as appropriate to reflect the application program to be added. However, it is usually very difficult to build a correct security policy database which can guarantee that the security settings are neither excessive nor inadequate and that all the necessary security settings are covered. In addition, if rigorous security management is being performed on the device in question, it would be a very difficult task to add a new application program. Therefore, the art of Literature 1 is problematic in that it is very difficult to maintain the required degree of security after the security policy database has been updated

The art of Literature 2 aims at ensuring security on a JVM that is independent of the CPU architecture. The JVM is implemented on the OS (Operating System) running on a communication terminal or a computer terminal, and thus is regarded as an application from a viewpoint of the OS. For this reason, it is impossible to ensure security for all the programs on a security communication terminal or a computer terminal running under the JVM. For example, a class file running under the JVM is provided with a native method invoking function which invokes system calls to the OS or the like. However, once the native method has been invoked, it becomes beyond the scope of security on the JVM. Furthermore, class files are distributed to the JVM in a JAR (JavaArchive) file. A JAR file contains a plurality of class files and may also contain certificates to certify the identity of these class files. When the JAR file is expanded, the certificates are not attached to the class files. Therefore, if a class file obtained by expanding the JAR file is moved to another location, security based on the file's identity is lost.

In the art of security enhancement according to Literature 3, the high-level API resides in the same space as the application program being executed. Therefore, the information in the tables, that is, the table which indicates associations between the trust determination/the safety degree evaluation units and the functions to which access is permitted and the table which indicates associations between the creators of the codes and the functions permitted to these codes, are exposed to risks of being utilized for spoofing.

The art of execution control according to Literature 4 needs resource information for every application program in order to identify which resource will be utilized by that application program. In the case of a small terminal whose resources (i.e., memories) are limited, such as a cell phone, implementing the Literature 4 art would lead to an increase in production cost because of the necessity to secure a sufficient amount of resource. Conversely, if the production cost is to be maintained at the current level, a problem of insufficient resources would arise.

The art of execution control according to Literature 5 involves the use of a module to manage hash values for detection of possible alterations to application programs. Such a module requires considerable management efforts. It is also problematic that a filter module operates in the same process space as business application programs because it makes the Literature 5 art susceptible to spoofing.

When implemented in a cell phone or other similar equipment, the control system according to Literature 6 faces a problem in that functions/resources for which usage restrictions are desirable may vary among cell phone manufactures or even among models from the same manufacturer. If different resource requirements are set for different contents in terminal equipment whose memory capacity is limited, e.g. a cell phone, a problem of memory consumption may become increasingly serious as the number of contents increases.

The art of access control described in Literature 7 requires the terminal to communicate with the content server every time it receives the provision of a content. This represents a problem because in the event of communication failure, the terminal will not be able to receive the provision of a content.

An object of the invention is to provide a program execution control technique in which a program can be added without requiring the security policy database in a device to be updated even if very rigorous security configuration management is being performed on the device.

Another object of the invention is to provide a program execution control technique which allows a program to be safely executed even if the program does not incorporate any security measures.

Yet another object of the invention is to provide a program execution control technique which minimizes the risk of the security mechanism within a terminal being spoofed.

Yet another object of the invention is to provide a program execution control technique in which security during the execution of a program can be ensured with minimum resource requirements (i.e. memory).

Yet another object of the invention is to provide a program execution control technique which enables the system stored in a cell phone to grant the program permission to access a resource within the system, instead of relying on the creator of the program for determination of whether or not to grant access permission.

### SUMMARY

According to a first exemplary aspect of the invention, a program execution control system which restricts functions available to each program operating on a computer by referencing security policy data for the program, includes a first unit which determines a security domain associated with the program, and a second unit which, based on the determined security domain and the security policy data, allows the program to operate normally only within the restriction specified for the security domain.

According to a second exemplary aspect of the invention, a program execution control system which restricts functions available to each program operating on a computer by referencing security policy data for the program, includes a first unit which determines a security domain associated with the program, and a second unit which sets access control by associating the information for the determined security domain with one of a plurality of function access types specified in the security policy data.

According to a third exemplary aspect of the invention, a program execution control method for restricting functions available to each program operating on a computer by referencing security policy data for the program, comprises a first process which determines the security domain associated with the program, and a second unit which, based on the determined security domain and the security policy data, allows the program to operate normally only within the restriction specified for the security domain.

According to a fourth exemplary aspect of the invention, a program execution control method for restricting functions available to each program operating on a computer by referencing security policy data for the program, comprises a first process which determines the security domain associated with the program, and a second unit which associates the information for the determined security domain with one of a plurality of function access types specified in the security policy data.

### BRIEF DESCRIPTION OF THE DRAWINGS

Fig. 1 is a block diagram which illustrates a first exemplary embodiment;
Fig. 2 is a block diagram of a program delivery server which illustrates the first exemplary embodiment;
Fig. 3 is a diagram which shows an example of the content of a security policy database used in the first exemplary embodiment;
Fig. 4 is a diagram which schematically shows the file structure for an application program, etc. used in the first exemplary embodiment;
Fig. 5 is a diagram which shows associations between security domain types and security IDs used in the first exemplary embodiment;
Fig. 6 is a flowchart which illustrates the operation of the first exemplary embodiment;
Fig. 7 is a block diagram which illustrates a second exemplary embodiment;
Fig. 8 is a block diagram of a program delivery server which illustrates the second exemplary embodiment;
Fig. 9 is a flowchart which illustrates the operation of the second exemplary embodiment;
Fig. 10 is a block diagram which illustrates a third exemplary embodiment;
Fig. 11 is a block diagram which illustrates a fourth exemplary embodiment;
Fig. 12 is a flowchart which illustrates the operation of the fourth exemplary embodiment;
Fig. 13 is a block diagram which illustrates a fifth exemplary embodiment;
Fig. 14 is a block diagram of a program delivery server which illustrates the sixth exemplary embodiment;
Fig. 15 is a block diagram which illustrates a sixth exemplary embodiment;
Fig. 16 is a block diagram which illustrates a seventh exemplary embodiment; and
Fig. 17 is a diagram which shows an example of the content of a security policy database to illustrate an example according to the invention.

### EXEMPLARY EMBODIMENT

Exemplary embodiments described in this specification will be explained by taking as an example a mobile terminal used for mobile communication and other similar purposes. However, the invention is not limited to applications to a mobile terminal, but can also be applied to various other kinds of information-related equipment which use application programs, etc. captured from external sources.

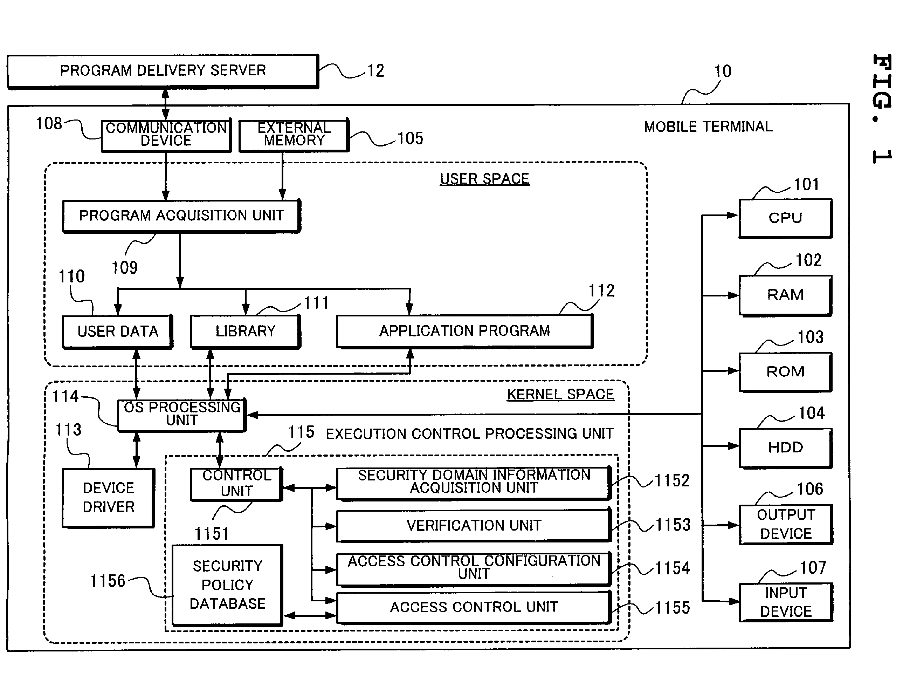

A first exemplary embodiment of the invention will be described below, with reference to Figs. 1 to 6.

As shown in Fig. 1, the first exemplary embodiment roughly comprises a mobile terminal 10 and a program delivery server 12, which are connected with each other via a wired or wireless network.

The mobile terminal 10 comprises a CPU (Central Processing Unit) 101, a RAM (Random Access Memory) 102, a ROM (Read Only Memory) 103, a HDD (Hard Disk Drive) 104, and external memory 105, an output device 106, an input device 107, a communication device 108, a program acquisition unit 109, user data 110, a library 111, an application program 112, a device driver 113, an OS (Operating System) processing unit 114, an execution control processing unit 115 and so on.

The execution control processing unit 115 further comprises a control unit 1151, a security domain information acquisition unit 1152, a verification unit 1153, an access control configuration unit 1154, an access control unit 1155, a security policy database 1156 and so forth.

As shown in Fig. 1, the program acquisition unit 109, the user data 110, the library 111 and the application program 112 operate within the user space of the mobile terminal 10, while the OS processing unit 114, the device driver 113 and the execution control processing unit 115 operate within the kernel space of the mobile terminal 10.

The user data 110, the library 111 and the application program 112 actually represent the user data, the library and the application program which have been captured into the mobile terminal 10, respectively However, for simplicity purposes, the user data, library and application program before being captured into the mobile terminal 10 may be assigned the same reference numbers 110, 111 and 112, respectively.

The application program 112 is not an intermediate code running under a JVM (Java Virtual Machine). Rather, it contains an executable code which the CPU 101 can interpret directly.

The operation of the units and devices mentioned above will now be described.

The CPU 101 is used for the purpose of controlling the units and devices within the mobile terminal 10, controlling the execution of programs, arithmetic processing, etc. The RAM 102 is a storage area and is temporarily used during the execution of a program which controls the units and devices within the mobile terminal 10. The RAM 102 may also temporarily store an executable code itself. The ROM 103 is a read-only storage device and stores the executable code and data of a program which controls the above-mentioned units and devices, etc. The executable code and data stored in the ROM 103 are not deleted when the mobile terminal 10 is powered off.

The HDD 104 is characterized by a slower read/write speed but a larger storage capacity than the RAM 102. The executable code and data stored in the HDD 104 are not deleted when the mobile terminal 10 is powered off. The external memory 105 is a removable, readable/writable storage device that can be detached from and attached to the mobile terminal 10. It can store an application program 112, a library 111, user data 110, executable codes and data, e.g. device drivers 113, and so forth. By attaching the external memory 105 to the mobile terminal 10, the user can add programs, executable codes, data and so on to the mobile terminal 10.

The output device 106 is a device to display the results of processes performed by the mobile terminal 10 on a display or output these results in synthetic voice. The input device 107 is provided with keys (buttons) or other input means. It is used to instruct the mobile terminal 10 to execute a new process.

The communication device 108 communicates with an entity outside the mobile terminal 10. It is used to capture application programs 112, libraries 111, user data 110, device drivers 113 and other similar data and executable codes into the mobile terminal 10. The program acquisition unit 109 acquires application programs and other items from the program delivery server 12 into the mobile terminal 10 via the communication device 108. As described above, application programs, etc. can also be acquired from the removable external memory 105.

The OS processing unit 114 is a means to perform processing by using an OS (for example, the one stored in the HDD 104). It processes system calls invoked by the application program 112. It also invokes the control unit 1151 while processing these system calls.

The control unit 1151 controls the execution of the application program 112 by controlling the other component units 1152 to 1155 of the execution control processing unit 115. The control unit 1151 may also control the execution of the library 111 in a similar manner to when controlling the application program 112. However, for simplicity, the execution control of the application program 112 will primarily explained in the description below.

The security domain information acquisition unit 1152 acquires the security domain information associated with the application program 112. The verification unit 1153 performs a verification process on the digital signature (or the digital certificate) attached to the application program 112. The access control configuration unit 1154 determines which security policy to apply to the acquired application program, based on the security domain information acquired by the security domain information acquisition unit 1152. It then sets the security policy thus determined to the application program 112. The access control unit 1155 performs access control when the application program 112 accesses a function of the mobile terminal 10. The security policy for access control is held in the security policy database 1156. The HDD 104 shown in Fig. 1 is not a required device. Fig. 1 omits the display device as well as the devices that are not directly relevant to the practice of the invention, such as the power source.

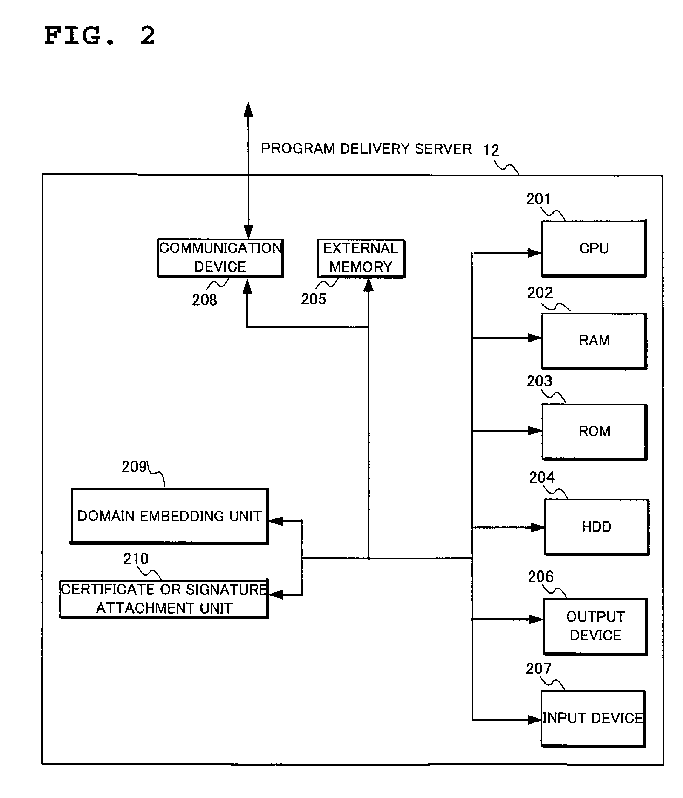

Fig. 2 shows an example configuration of the program delivery server 12. The program delivery server 12 comprises, at least, a CPU 201, a RAM 202, a ROM 203, an HDD204, an external memory 205, an output device 206, an input device 207, a communication device 208, a domain embedding unit 209 and a certificate or signature attachment unit 210. The functions of the units 201 to 208 shown in Fig. 2 are omitted from the description below since they are the same as those of the units 101 to 108 of the mobile terminal 10 shown in Fig. 1.

The domain embedding unit 209 has a function to embed security domain information into the application program to be transmitted which is stored in the HDD 204 or other storage unit. Meanwhile, in order to facilitate alteration checks performed on the mobile terminal 10, the certificate or signature attachment unit 210 uses a hash function or other means to obtain a hash value for the application program embedded with the security domain information, and attaches a signature or certificate which contains the resultant hash value to the application program.

The operation of the first exemplary embodiment of the invention will be described below, with reference to Figs. 1 to 6.

First, the operation up to when the program delivery server 12 prepares an application program for delivery to the mobile terminal 10. The application program is inputted from the communication device 208 or the external memory 205 into the program delivery server 12 and is stored within an internal storage, for example, the HDD 204. At this time, the information on the security domain to which the application program belongs is also inputted. The domain embedding unit 209 attaches the domain information to the inputted application program. Then, the certificates or signature attachment unit 210 obtains a hash value for the application program embedded with the security domain information, and attaches a signature or certificate which contains that hash value to the application program. The application program is then transmitted to the mobile terminal 10 via the communication device 208 or is stored in the removable external memory 205.

Alternatively, a configuration may be used in which the function to embed domain information in an application program file is implemented in another server, rather than in the program delivery server 12. In this case, a file embedded with domain information may be placed in the program delivery server 12. In other words, the processes described above may be divided among several servers, rather than the program delivery server 12 performing all of these processes.

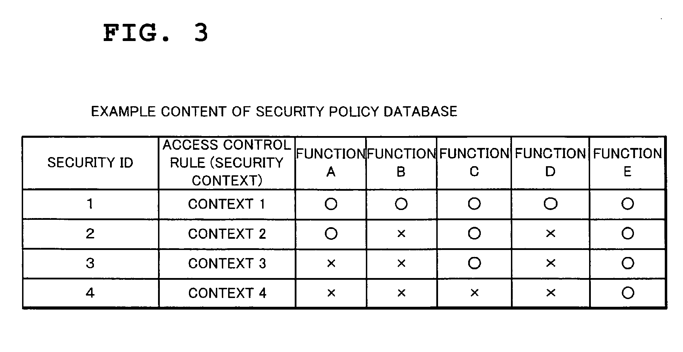

Fig. 3 is a diagram which schematically shows an example configuration of the security policy database 1156 in Fig. 1.

The application program 112 stored in the mobile terminal 10 is associated with one of the security IDs shown in Fig. 3. The application program 112 can access any of the functions permitted to itself (for example, all or any of Functions A to E) based on the access control rule (security context) which is uniquely identified by the security ID associated with the application program 112. If the invention is applied to a mobile terminal as with an exemplary embodiment described later, the functions mentioned herein refer to "make a phone call," "control calling rate," "sound functions," "perform data communication," "use the screen" and so on.

As shown in Fig. 3, if the application program 112 is associated with, for example, #3 of the security IDs, it can access Functions C and E only and is prohibited from accessing Functions A, B and D.

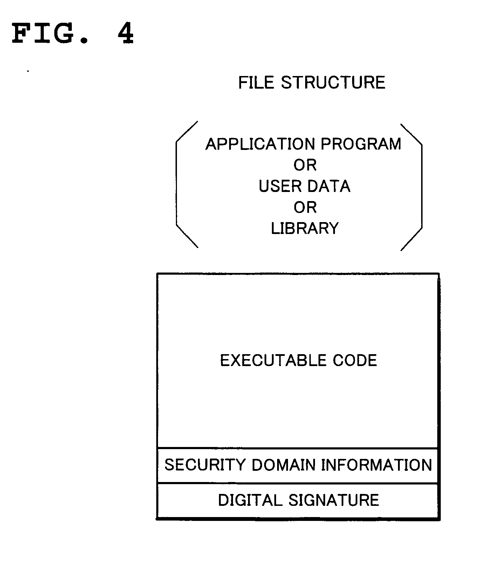

Fig. 4 is a diagram which schematically shows an example data configuration for the files of each of the application program 112, the library 111 and the device driver 113 shown in Fig. 1. The example shown in the diagram consists of an executable code, security domain information and a digital signature.

The description below assumes that the data configuration for the application program 112 is the one shown in Fig. 4. However, it should be noted that, in addition to the configuration consisting of an executable code, security domain information and a digital signature as shown in Fig. 4, the application program 112 may be of a configuration consisting of an executable code and security domain information only, or of a configuration consisting of an executable code only. The same goes true for the library 111 and the device driver 113.

The executable code is an instruction code to be executed by the CPU 101. The security domain information is information on the security domain to which the application program belongs. The digital signature is created for the executable code and the security domain information. The signature may be encrypted. By attaching the digital signature, it becomes possible to detect any alteration to the files of the application program, etc. while they are delivered over a network. The digital signature is a technology in the public domain. One example of widely used techniques for this technology is the one in which a distributor of an application program creates signature data by generating a hash value through the use of a hash function, such as SHA-1 (Secure Hash Algorithm 1).

It is obvious for those skilled in the art that the sequence of the executable code, security domain information and digital signature is not limited to the one shown in Fig. 4. These elements may be in any sequence as long as they are contained in the application program, etc. captured into the terminal. A digital certificate may be attached in place of a digital signature. In this case, the digital certificate may contain security domain information. One example of widely used format of a digital certificate is the one specified in ITU (International Telecommunication Union) X.509. A digital certificate represents that the credibility of the security domain information contained therein is guaranteed by a public certification authority.

If the application program 112 contains a digital signature as shown in Fig. 4, and if this digital signature is verified to be correct, it can be judged that the distributor, the executable code and the security domain information to which the executable code belongs have been duly approved and that the application program 112 can be safely executed on the mobile terminal 10 (Fig. 1). This applies similarly to cases where a digital certificate is attached in place of a digital signature. However, on the mobile terminal 10 shown in Fig. 1, it is possible to run an untrusted application program (whose credibility is questionable), for example, one that consists of an executable code only (without the security domain information or the digital signature in Fig. 4).

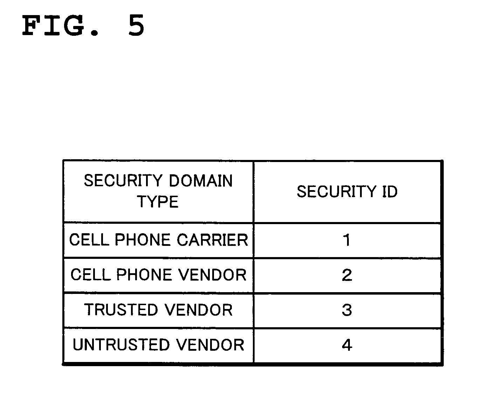

Fig. 5 is a diagram which shows associations between the types of the security domain contained in the application program 112 and the security IDs which identify the access control rules held in the security policy database 1156 (see Fig. 3). The data shown in Fig. 4 is held in the access control configuration unit 1154 in Fig. 1. In the example shown in Fig. 5, if the application program does not have any security domain information but contains an executable code only, the security ID is determined to be "4" because the security domain information type is classified as "untrusted vendor."

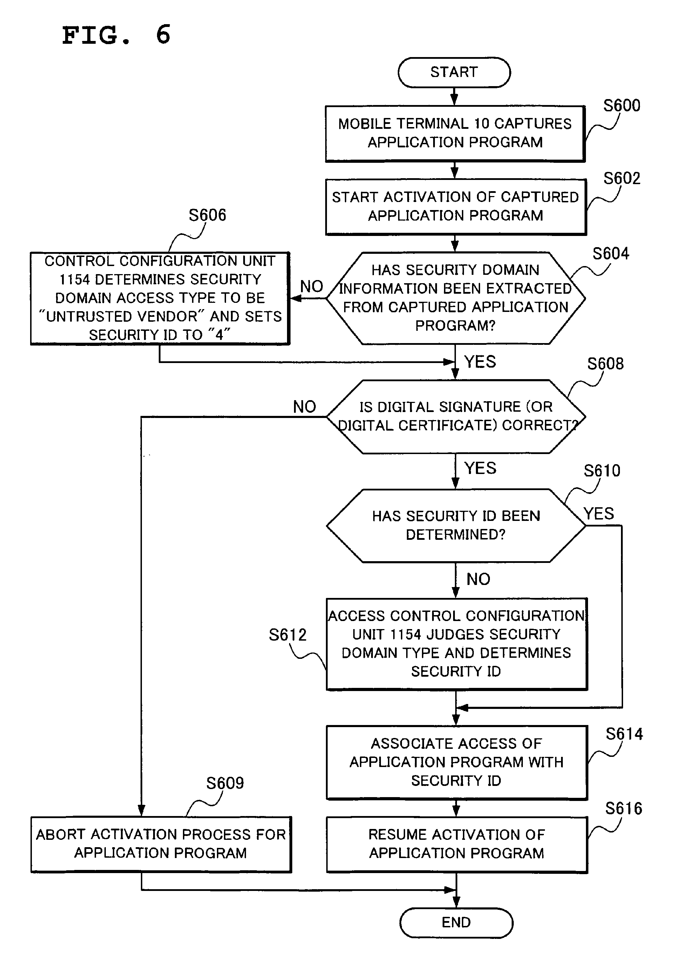

The operation of this exemplary embodiment will now be explained, by taking an application program as an example and using the flowchart of Fig. 6.

The operation explained based on the flowchart of Fig. 6 assumes that the creator or distributor of a trusted application program attaches security domain information and a digital signature (or a digital certificate) to the application program to transmit and places the application program on the program delivery server 12 (Figs. 1 and 2). It should be noted that the creator or distributor may record the application program in an external memory 105 (for example, an SD (Secure Digital) card), instead of placing it on the program delivery server 12.

At step S600, the mobile terminal 10 captures the application program placed on the program delivery server 12 into the mobile terminal 10 via the application acquisition unit 109 (or, alternatively, the mobile terminal 10 captures the application program from the external memory 105 inserted there into).

While, in this case, the application program to be delivered to the mobile terminal 10 contains security domain information and a digital signature, there may be cases where an untrusted application program which does not contain any security domain information or digital signature is captured into the mobile terminal 10 in the manner described above.

Similarly, libraries and device drivers are captured into the mobile terminal 10 in a similar manner to application programs (in Fig. 1, the captured library and device driver are shown as 111 and 113, respectively).

When the application program (112 in Fig. 1) captured into the mobile terminal 10 is executed, an activation request is submitted to the OS processing unit 114 (step S602).

Following this, at step S604, a determination is made as to whether or not security domain information has been extracted from the captured application program 112. In order to extract the security domain information, the OS processing unit 114 invokes the control unit 1151 while it is activating the application program 112. It is by the control unit 1151 that the domain information acquisition unit 1152 is actually invoked. The domain information acquisition unit 1152 analyzes the files making up the application program 112 (see Fig. 4), and extracts security domain information, if any, from the application program 112.

If the domain information acquisition unit 1152 has been unable to extract security domain information, it proceeds to step S606. At this step, the application program 112 is determined to be untrusted and the access control configuration unit 1154 is invoked. The access control configuration unit 1154 determines that the security domain type is "untrusted vendor," sets the security ID of the application program to "4" and then proceeds to step S608. If the domain information acquisition unit 1152 has been able to extract security domain information at step S604, it proceeds directly to step S608.

At step S608, the verification unit 1153 extracts the digital signature (or the digital certificate) from the application program 112 and verifies it to determine whether or not the digital signature (or the digital certificate) is correct. If the application program has no digital signature (or digital certificate) attached thereto, the verification unit 1153 proceeds to step S610.

If the application program has a digital signature attached thereto, the verification unit 1153 verifies the signature based on the public key paired with the signed private key (the former key is previously stored in the mobile terminal 10). In case the digital signature has been encrypted, the verification unit 1153 decrypts the signature before verifying it. There may be cases where the private key used during the signing process varies between different sets of security domain information. In these cases, the public key used for verification of the signature as well varies depending on the security domain information. In cases where a digital certificate has been used in place of a digital signature, the digital certificate is verified. If the digital signature (or the digital certificate) is judged to be correct by the verification, the procedure proceeds to step S610.

If, at step S608, the digital signature (or the digital certificate) has been judged to be incorrect, the activation process for the captured application program 112 is cancelled because the captured application program 112 may have been altered (step S609).

If, at step S610, it has been judged that the security ID is yet to be determined, the procedure proceeds to step S612. If the security ID has already been determined (that is, the process of step S606 has been completed), the procedure proceeds to step S614. At step S612, the access control configuration unit 1154 is invoked to configure access control settings. In this case, security domain information exists, so the security domain information type is judged from that security domain information. Then, the security ID corresponding to the security domain information type is determined by referencing the table shown in Fig. 5.

At step S614, the process of the application program is associated with the security ID. It should be noted that the application program 112 operates as a process on the mobile terminal 10 and that the security ID thus determined is associated with that process. For example, if process management data for managing the process exists within the OS, the association process can be accomplished by storing the security ID in the process management data.

One method of enabling this is that the security ID is directly set in the process management data. If the executable code of the application program 112 is yet to be mapped to the process, an appropriate method of enabling this may be that the security information concerning the application program 112 is previously rewritten such that, when the executable code is mapped, the security ID corresponding to the management data for this particular process is stored in the security information concerning the application program 112 which is being managed by the access control unit 1155. In this case, instead of the applicable security ID, a temporary ID from which the applicable security ID can be derived may be set in the security information.

The security ID part of the table shown in Fig. 5 is used as a temporary ID, and a table which indicates the association between the temporary ID and the security ID is previously set in the security policy database 1156. After the process of the application program 112 has been generated, an applicable security ID is determined from the temporary ID and the resultant security ID is stored in the management data for the process. If necessary, the information required for determining the security ID from the temporary ID may be previously set in the security policy database 1156. The access control unit 1155 is an existing security infrastructure and enables well known access control mechanisms, the representative of which is SELinux. On the activation of the process, it sets the security IDs in the process management data while the executable code is being mapped to the process.

Alternatively, data which associates the process ID and the security ID with each other may previously be created and stored in the control unit 1151. Yet alternatively, data which associates the file ID by which the file representing the application program 112 is uniquely identifiable (or the path for such file) and the security ID may be created and stored.

The access control configuration process completes when a process generated on the mobile terminal 10 based on the application program 112 has been associated with a security ID. Thereafter, the activation of the application program 112 is resumed and executed as a process (step S616).

Fig. 6 is a flowchart which illustrates the operation performed where security domain information is attached to the application program 112 separately from a digital signature (or a digital certificate). If a digital certificate is attached in place of a digital signature and if security domain information is contained in the digital certificate, a determination at step S604 concerning the acquisition of security domain information can be made after the digital certificate has been verified at step S608.

The process generated from the application program 112 performs processing in accordance with the executable code. Access by the executable code within the mobile terminal 10 to various resources is performed via the OS. In the context of Fig. 1, the executable code accesses various resources through the OS processing unit 114. More specifically, when the executable code attempts an access to a particular resource, the OS processing unit 114 invokes the control unit 1151 and then the access control unit 1155. If, while these units are being invoked, it is found that data (a table) which indicates associations between the process ID (or the ID of the file which represents the application program that indicates the executable code for the process) and the security ID exists, the control unit 1151 acquires the process ID of the invoked process and the security ID associated therewith and invokes the access control unit 1155.

Alternatively, if, as described above, the security ID exists within the process management data, the access control unit 1155 acquires the security ID from the process management data of the process. After obtaining the security ID for the process, the access control unit 1155 references the security policy database 1156 and judges whether the access control rule permits or prohibits the process to access the desired function. If the access is permitted, the access control unit 1155 passes the data so indicating to the OS processing unit 114 via the control unit 1151, and the process accesses the desired function. If the access is prohibited, the control unit 1155 passes the data so indicating to the OS processing unit 114 via the control unit 1151, and the OS processing unit 114 returns an error to the process.

By way of example based on the security database shown in Fig. 3, if the security ID for a certain process of the application program 112 is judged to be "3," then the process is prohibited from accessing Functions A, B and D.

The effects of the first exemplary embodiment described above will be described below.

According to this exemplary embodiment, a security ID, which determines whether or not an application program 112 captured into a mobile terminal 10 can use a specific function among a plurality of functions of the mobile terminal 10, can be obtained from the security domain information attached to the application program 112. In other words, by referencing the security policy database 1156 based on the security domain information extracted from the application program 112, the security ID (the access control rule) previously stored in the security policy database 1156 can be uniquely obtained. Since the security policy database 1156 is used for reference only, an application program 112 can be added and executed without needing to update the security policy database 1156. Two effects can be achieved by this. One effect is that the necessity can be eliminated of the task of re-building the security policy database, which could be highly complex and time-consuming. Another effect is that there is no need to update the data and, as a consequence, the risk can be avoided of errors being included in the security policy data during the data update process.

According to this exemplary embodiment, a mobile terminal 10 can safely capture an application program 112 from an external source. This is because security domain information and a digital signature (or a digital certificate) are attached to each file which represents an application program 112 and because an alteration check is performed based on the security domain information and the digital signature (or the digital certificate) when such file is activated as an application.

Therefore, in the event that an application program 112 on a mobile terminal 10 stores a vicious application program received through communication with an unknown external server, security can be ensured because the digital signature or digital certificate is verified at the OS level during the activation process for the vicious application program.

According to this exemplary embodiment, it is possible to detect alterations made by a third party on a mobile terminal 10 after the application program 112 was captured into the mobile terminal 10. This is because security domain information and a digital signature (or a digital certificate) are attached to each file which represents an application program 112 and because an alteration check is performed based on the security domain information and the digital signature (or the digital certificate) every time such file is activated as an application.

According to this exemplary embodiment, an application program 112 can be safely activated from another application program without needing to be conscious of security. This is because a domain information acquisition unit, a verification unit, an access control configuration unit and an access control unit exist as part of the OS functions. All these units are invoked by an OS processing unit (a system call) which is always invoked during the process of activating an application, thereby creating an execution environment as appropriate according to the distributor of the application program to be activated.

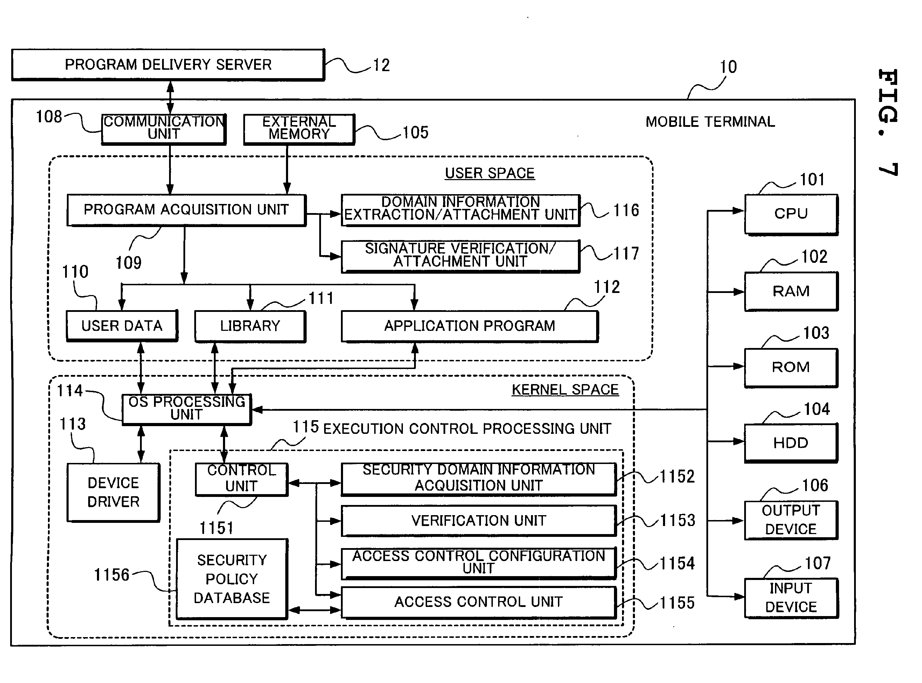

Next, a second exemplary embodiment of the invention will be described below, with reference to Figs. 7 to 9.

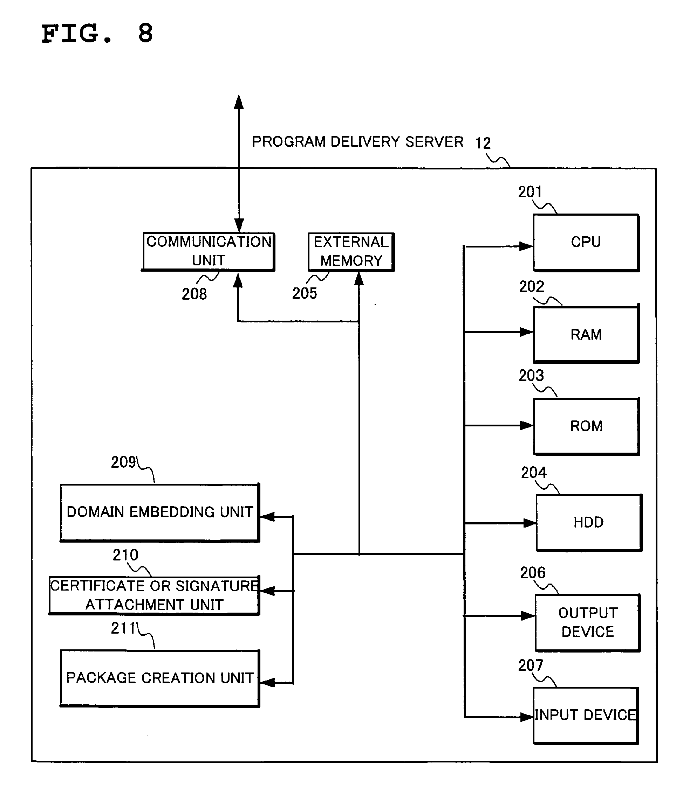

Figs. 7 and 8 show example configurations according to a second exemplary embodiment. The example configuration shown in Fig. 7 is the same as the example configuration of the first exemplary embodiment shown in Fig. 1, except for the addition of a domain information extraction/attachment unit 116 and a signature verification/attachment unit 117. Unlike the first exemplary embodiment, the second exemplary embodiment captures an application package which consists of a plurality of application programs from an external source.

In addition to a function to extract security domain information from an application package, the domain information extraction/attachment unit 116 has a function to expand the application package into a plurality of application programs and attach the security domain information to each.

Each application package has security domain information and a digital signature (or a digital certificate) attached thereto. However, the individual application programs contained in an application package may only have either security domain information or a digital signature (or a digital certificate) or sometimes none may be attached thereto. An application package may contain user data, libraries and/or drivers, in addition to application programs. A library and a driver may have security domain information and a digital signature (or a digital certificate) attached thereto, similarly to an application program.

The signature verification/attachment unit 117 has a function to attach (or embed) a digital signature to each of the application programs taken out by expanding a package, in addition to a function to verify a digital signature or digital certificate contained in an application package.

An application package is placed on a program delivery server 12 by the creator or distributor of the application programs and is captured (or downloaded) into a mobile terminal 10 by its application program acquisition unit 109. Alternatively, as explained for the first exemplary embodiment, an application package may be captured by the application program acquisition unit 109 into the mobile terminal 10 from an external memory 105 (for example, an SD card) inserted into the mobile terminal 10.

Fig. 8 shows an example configuration of the functions of the program delivery server 12 shown in Fig. 7.

A comparison of Fig. 8 with Fig. 2, a figure used in the description of the first exemplary embodiment, shows that Fig. 8 has the addition of a package creation unit 211. The package creation unit 211 has a function to collect a plurality of application programs into one package. Unlike in the first exemplary embodiment, the domain embedding unit 209 has a function to attach security domain information to an application package. However, in addition to this function, the domain embedding unit 209 may be configured to have a function to attach security domain information to each of the application programs contained in an application package. The certificate or signature attachment unit 210 has a function to attach a digital signature (or a digital certificate) to an application package. However, similarly to the above, the certificate or signature attachment unit 210 may be configured to have a function to attach a digital signature (or a digital certificate) to each of the application programs contained in an application package.

If an application package which contains a plurality of application programs and security domain information therefor have been input into the program delivery server 12, the package creation unit 211 is not used. Rather, the domain embedding unit 209 and the certificate or signature attachment unit 210 create an application package having security domain information and a digital signature (or a digital certificate) attached thereto.

If a plurality of application packages and security domain information therefor have been input into the program delivery server 12, security domain information is embedded into each of the application programs by the domain embedding unit 209 as necessary and, also as necessary, a digital signature (or a digital certificate) is added to each of the application programs by the certificate or signature attachment unit 210.

However, it may be chosen not to attach security domain information or digital signatures (or digital certificates) to the application programs. In this case, the program delivery server 12 does not perform anything on the application programs. Next, the package creation unit 211 creates an application package containing the plurality of application programs. Security domain information is also attached to the application package by the domain embedding unit 209. In addition, a digital signature (or a digital certificate) is attached to the application package by the certificate or signature attachment unit 210. If security domain information is also contained in the digital certificate, there is no need for the domain embedding unit 209 to attach security domain information to the application package.

Alternatively, a configuration may be used in which the function to embed domain information and the function to attach a certificate or signature, both described above, are implemented in another server, rather than in the program delivery server 12. In this case, application programs and application packages embedded with domain information and certificates/signatures are placed in the program delivery server 12. In other words, the processes described above may be divided among several servers, rather than being performed by the program delivery server 12 alone.

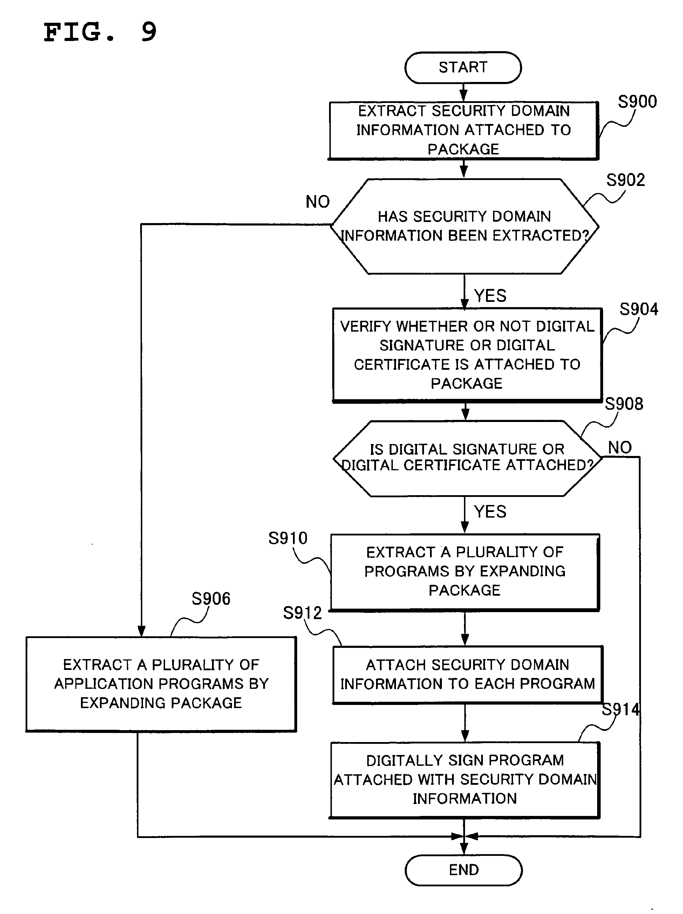

Fig. 9 is a flowchart which illustrates the operation of the second exemplary embodiment shown in Figs. 7 and 8, up to when the application programs in an application package captured into a mobile terminal 10 are ready for activation. The flowchart assumes that, before the operation in this flowchart starts, the program acquisition unit 109 of the mobile terminal 10 has already captured a program package into the mobile terminal 10.

At step S900, the program acquisition unit 109 invokes the domain information extraction/attachment unit 116. Through the unit 116, the process of extracting the security domain information attached to the application package is performed. At step S902, the domain information extraction/attachment unit 116 determines whether or not the security domain information has been extracted and notifies the result to the program acquisition unit 109 by which it was invoked. If the security domain information has been extracted, the procedure proceeds to step S904. Otherwise, at step S906, the program acquisition unit 109 invokes the domain information extraction/attachment unit 116 to expand the package, acquires the expanded plurality of application programs and completes the flow.

At step S904, the program acquisition unit 109 invokes the signature verification/attachment unit 117. Through the unit 117, verification is made to determine whether or not a digital signature or digital certificate is attached to the application package. The signature verification/attachment unit 117 notifies the verification result to the program acquisition unit 109. If encrypted, the digital signature or digital certificate is decrypted before verification.

As shown in the next step S908, the flow of Fig. 9 ends if the digital signature or digital certificate is not attached. Otherwise, it proceeds to step S910. At step S910, the program acquisition unit 109 invokes the domain information extraction/attachment unit 116. Through the unit 116, the process of expanding the package to take out the plurality of application programs is performed.

At step S912, the program acquisition unit 109 invokes the domain information extraction/attachment unit 116, which attaches security domain information to each of the application programs.

Finally, at step S914, the program acquisition unit 109 invokes the signature verification/attachment unit 117, which digitally signs (i.e., attaches a digital signature to) each of the application programs to which the security domain information is attached. In preparation for this purpose, a private key and a public key are previously created within the mobile terminal 10. Each of the application programs is digitally signed using this private key, and the public key is notified to the verification unit 1153 for verification of the signature at the activation of each application program. At step S914, a digital certificate may be attached in place of a digital signature.

If there are any library and device driver in the application package, the same process described above is also performed on them.

The operation performed at the activation of the plurality of application programs (shown as 112 in Fig. 7) is the same as the first exemplary embodiment.

The flowchart of Fig. 9 has been described on the assumption that the security domain information is attached to the application package captured from an external source, separately from the digital signature or digital certificate. If the security domain information is contained in the digital certificate, the order of step S902 and step S908 must be reversed.

According to the second exemplary embodiment, it is possible to distribute a plurality of application programs as an application package. Since a mobile terminal 10 can capture multiple application packages at a time, there is an effect that the volume of data communication can be reduced. In addition, since each of the application programs obtained by expanding an application package is attached with the same security domain information as the one attached to the application package, the identity of each application program (after step S908 or S914, which is shown by the reference number 112 in Fig. 7) can easily be verified during the activation process. Moreover, since each application program has been digitally signed, it is easy to detect alterations made within the mobile terminal 10 after the application package was expanded, if any.

A possible form of an application package is that security domain information and a signature (or a certificate) are attached to both the application package and the application programs contained therein. Such an application package can be dealt with either by skipping step S912 in Fig. 9 or by overwriting the security domain information in the application programs with the security domain information attached to the application package.

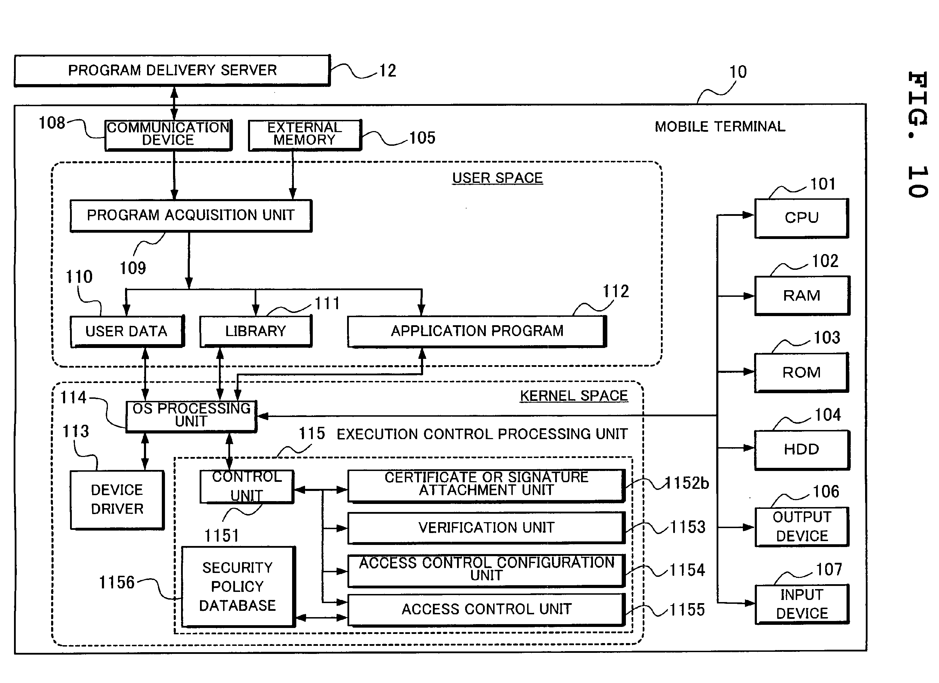

A third exemplary embodiment of the invention will now be described with reference to Fig. 10.

As described above, in the first and second exemplary embodiments, data which describes the security domain information and is attached to a program is extracted and, based on the data, the security domain of the program is determined or identified.

In contrast, in the third exemplary embodiment, a program captured into a mobile terminal 10 is attached with a digital certificate or digital signature, instead of domain information. According to the third exemplary embodiment, in order to determine the domain of the program, the certificate or signature is acquired (extracted) from the program, and the acquired certificate or signature is verified. If the acquired certificate or signature passes the verification, the domain is determined based on the type of the public key.

To explain with reference to Fig. 10, the certificate or signature attached to each of the programs is acquired (or extracted) by the certificate or signature acquisition unit 1152b, and is stored in the mobile terminal by the verification unit 1153b. Also by the verification unit 1153b, the domain of each of the programs is verified in a sequential manner by using the root certificate (i.e., the parent certificate) or public key associated with each of the plurality of domains. The root certificate (i.e. the parent certificate) or public key used in a successful verification (normal termination) is determined to be the security domain of the verified program.

One possible variation of the third exemplary embodiment is to add a certificate or signature to an application package, as is done in the second exemplary embodiment described above. A detailed description of the operation of this variation will be omitted because it will be readily appreciated by those skilled in the art from the explanation of the second and third exemplary embodiments.

In the first to third exemplary embodiments, access by a program to the resources within a mobile terminal is restricted according to the security domain of the program. However, the invention also allows various other restrictions (such as, restriction on available resources) to be imposed on a program according to its security domain. For example, it is possible to enable a program to operate normally, only after the security domain of the program has been determined and only within the restrictions specified for the domain.

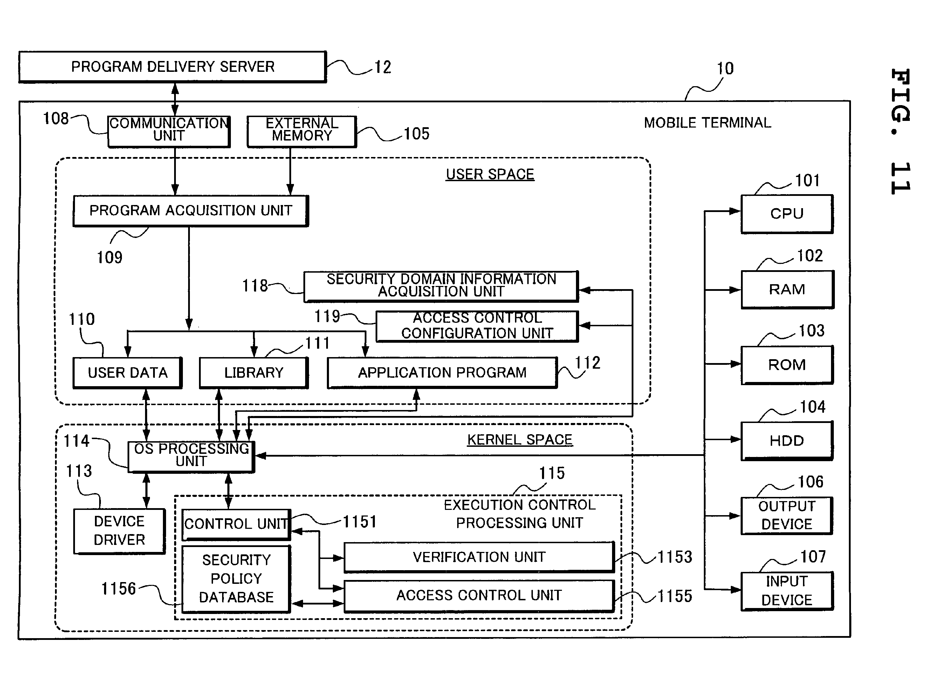

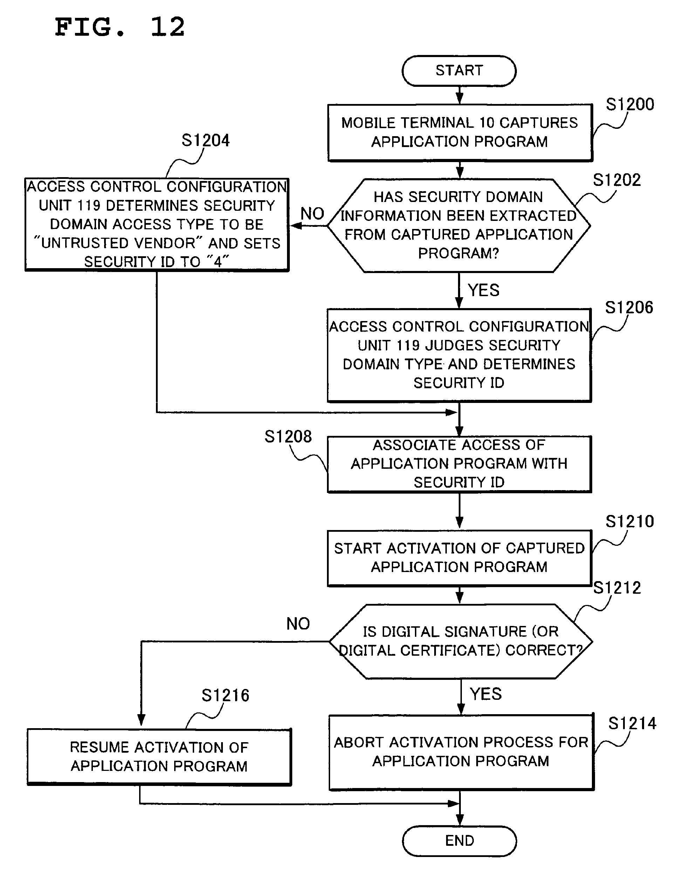

A fourth exemplary embodiment of the invention will now be described with reference to Figs. 11 and 12.

In the first to the third exemplary embodiments described above, security domain information is extracted from an application program within the kernel space (OS), and a security ID corresponding to the extracted security domain information is set in the application program.

In the fourth exemplary embodiment, the security domain information acquisition unit 1152 and the access control configuration unit 1154, which are located in the kernel space in Fig. 1, are moved to the user space, as shown in Fig. 11, and are caused to operate as a security domain information acquisition unit 118 and an access control configuration unit 119, respectively. More specifically, the security domain information acquisition unit 118 operates in the user space in a similar manner to the security domain acquisition unit 1152 in Fig. 1 of the first exemplary embodiment, and the access control configuration unit 119 operates in the user space in a similar manner to the access control configuration unit 1154 in Fig. 1 of the first exemplary embodiment.

The access control unit in 1155 in Fig. 11 has a function to enable the operations related to the configuration of security IDs of the application program 112 to be performed from the user space. For this purpose, an access control rule is previously set in the security policy database 1156 so that access from the user space to the access control unit 1155 will be permitted only if the access request is from the access control configuration unit 119.

The operation of this exemplary embodiment will now be explained, by taking an application program as an example and with reference to the flowchart of Fig. 12.

The operation explained based on the flowchart of Fig. 12 assumes that the creator or distributor of a trusted application program attaches security domain information and a digital signature (or a digital certificate) to the application program for transmission and places the application program on the program delivery server 12 (Fig. 11). It should be noted that the creator or distributor may record the application program in an external memory 105 (for example, an SD (Secure Digital) card), instead of placing it on the program delivery server 12.

At Step S1200, the mobile terminal 10 captures the application program placed on the program delivery server 12 into the mobile terminal 10 via the application acquisition unit 109 (or the mobile terminal 10 captures the application program from the external memory 105 inserted thereinto).

While, in this case, the application program to be delivered to the mobile terminal 10 contains security domain information and a digital signature, there may be cases where an untrusted application program which does not contain any security domain information or digital signature is captured into the mobile terminal 10 in the manner described above.

Similarly, libraries and device drivers can also be captured into the mobile terminal 10 in a similar manner to application programs described above (in Fig. 11, the captured library and device driver are shown as 111 and 113, respectively).

When the application program captured by the mobile terminal 10 (shown as 112 in Fig. 11) is activated, it is determined at step S1202 whether or not security domain information has been extracted from the captured application program 112. In order to extract the security domain information, the security domain information acquisition unit 118 is invoked. The security domain information acquisition unit 118 analyzes the file comprising the application program 112 (see Fig. 4 for an example), and extracts security domain information, if any, from the application program 112.

If the security domain information acquisition unit 118 has been unable to extract security domain information, it proceeds to Step S1204. At this step, the application program 112 is determined to be untrusted and the access control configuration unit 119 is invoked. The access control configuration unit 119 determines that the security domain type is "untrusted vendor," sets the security ID of the application program to "4" and then proceeds to Step S1208. If the security domain information acquisition unit 118 has been able to extract security domain information at Step S1202, it proceeds directly to Step S1208.

At step S1206, the access control configuration unit 119 is invoked to determine the security domain information type based on the security domain information, and the security ID corresponding to that security domain information type by, for example, referencing the table shown in Fig. 5.

At Step S1208, the application program 112 is associated with the security ID. It should be noted that the application program 112 operates as a process on the mobile terminal 10 and that the security ID thus determined is associated with that process. At this step, the application program is yet to be generated as a process, a setting is performed to enable such association during the course of generating a process. This can be done by, for example, rewriting the security information concerning the application program 112 such that the security ID corresponding to the management data of the process is stored in the security information concerning the application program 112 which is being managed by the access control unit 1155, when the executable code of the application program 112 is mapped (loaded) to the memory.

In this case, instead of an applicable security ID, a temporary ID from which the applicable security ID can be derived may be set in the security information. The security ID part of the table shown in Fig. 5 is used as a temporary ID, and a table which indicates the association between the temporary ID and the security ID is previously set in the security policy database 1156.

After the process of the application program 112 has been generated, an applicable security ID is determined from the temporary ID and the resultant security ID is stored in the management data for the process. The information required for determining the security ID from the temporary ID, if necessary, must be previously set in the security policy database 1156. The access control unit 1155 is an existing security infrastructure and enables well known access control mechanisms, the representative of which is SELinux. On the activation of the process, it sets the security ID in the process management data while the executable code is being mapped to the process.

When the application program 112 is activated at step S1210, a request for activation of the application program 112 is submitted to the OS processing unit 114.

At Step S1212, the verification unit 1153 extracts the digital signature (or the digital certificate) from the application program 112 and verifies it to determine whether or not the digital signature (or the digital certificate) is correct. If the application program has no digital signature (or digital certificate) attached thereto, the verification unit 1153 proceeds to Step S1214.

If the application program has a digital signature attached thereto, the verification unit 1153 verifies the signature based on the public key paired with the signed private key (note that the public key is previously stored in the mobile terminal 10). In case the digital signature has been encrypted, the verification unit 1153 decrypts the signature before verifying it. There may be cases where the private key used during the signing process varies between different sets of security domain information. In these cases, the public key used for verification of the signature as well varies depending on the security domain information. In addition, in cases where a digital certificate has been used in place of a digital signature, the digital certificate is verified. If the digital signature (or the digital certificate) is judged to be correct by the verification, the procedure proceeds to Step S1214.

If, at Step S1212, the digital signature (or the digital certificate) has been judged to be incorrect, the activation process for the captured application program 112 is cancelled because there is a possibility that the application program 112 has been altered (Step S1216).

Finally, the activation process for the application program 112 completes and the application program 112 is executed as a process on the mobile terminal 10 (Step S1214).

The security policy database 1156 is previously configured such that the security ID of the generated process defaults to "4" if step S1202 to step S1208 have been skipped and, instead, the activation process for the application program 112 has been performed from step S1210. By this, it can be ensured that the application program 112 will be performed as "untrusted vendor" in Fig. 5 whenever such a situation occurs.

Security IDs are previously set in the security policy database 1156 so that those application programs for which security IDs will not be acquired from the program delivery server 12 (because their security IDs already exist in the mobile terminal 10) will be assigned appropriate security IDs.

As described above, Fig. 12 is a flowchart for cases where security domain information is attached to the application program 112 separately from a digital signature (or a digital certificate). However, there may be cases where a digital certificate is attached in place of a digital signature and security domain information is contained in the digital certificate. These cases can be dealt with by adding a process similar to the verification of a digital certificate at step S1212 before the determination process at step S1202 concerning the acquisition of security domain information. By this, it can be ensured that the security domain information will be extracted after the digital certificate has been verified. The verification of the digital certificate can be accomplished by either requesting the verification unit 1153 in Fig. 11 to verify the digital certificate or providing the same function as the verification unit 1153 in the user space.

The process generated from the application program 112 performs processing in accordance with the executable code. Access control at this time is the same as the first, second and the third exemplary embodiments described above.

While the configuration and operation of the fourth exemplary embodiment described above are based on those of the first exemplary embodiment, the same effects can be realized for application programs which have no security domain information attached thereto as described in the third exemplary embodiment.

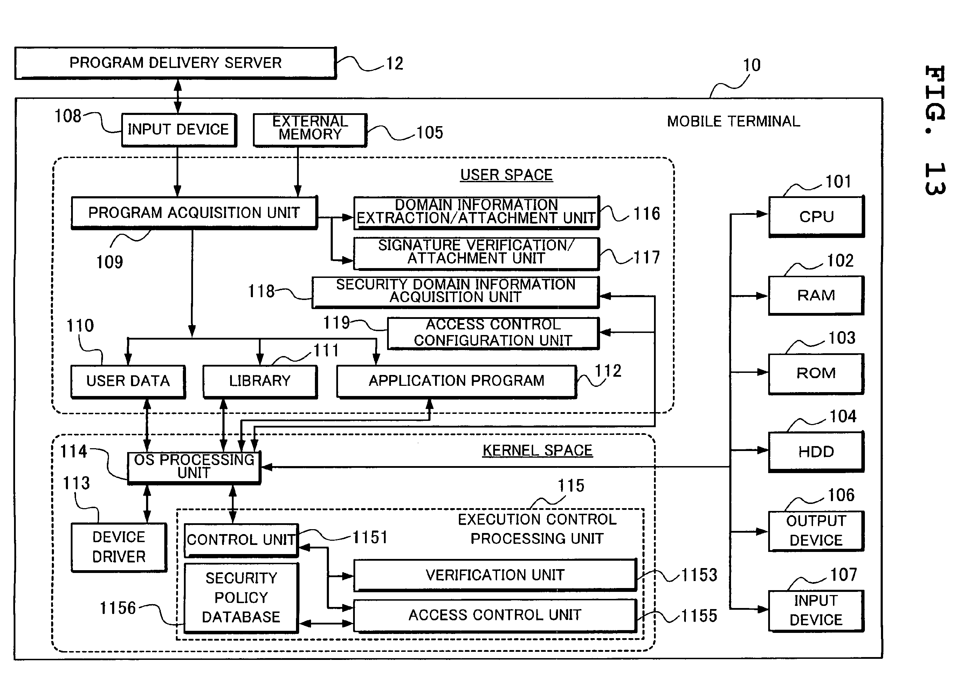

A fifth exemplary embodiment of the invention will now be described with reference to Fig. 13.

The fifth exemplary embodiment is characterized by the addition of a domain information extraction/attachment unit 116 and a signature verification/attachment unit 117 in the user space of the fourth exemplary embodiment (Fig. 11). The domain information extraction/attachment unit 116 and the signature verification/attachment unit 117 are the same as those described in the second exemplary embodiment. The configuration of Fig. 13 other than the domain information extraction/attachment unit 116 and the signature verification/attachment unit 117 is the same as the fourth exemplary embodiment (Fig. 11).

The operation to expand a software package in the fifth exemplary embodiment is the same as the process from step S900 to S914 (Fig. 9) in the second exemplary embodiment. Furthermore, the operation to activate an application program 112 in the fifth exemplary embodiment is the same as the operation from step S1200 to S1216 (Fig. 12) in the fourth exemplary embodiment.

While the configuration and operation of the fifth exemplary embodiment described above are based on those of the second exemplary embodiment, the same effects can be realized for application programs which have no security domain information attached thereto as described in the third exemplary embodiment.

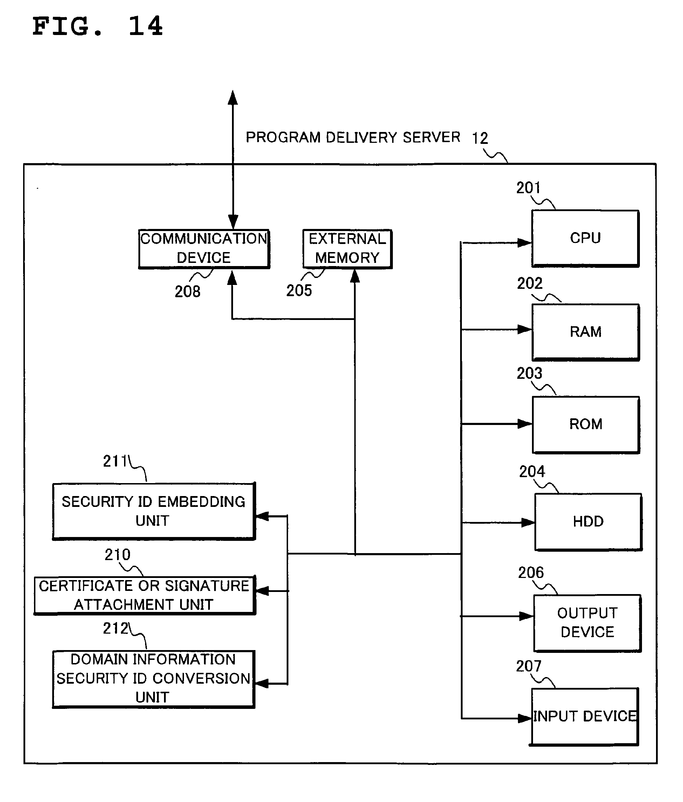

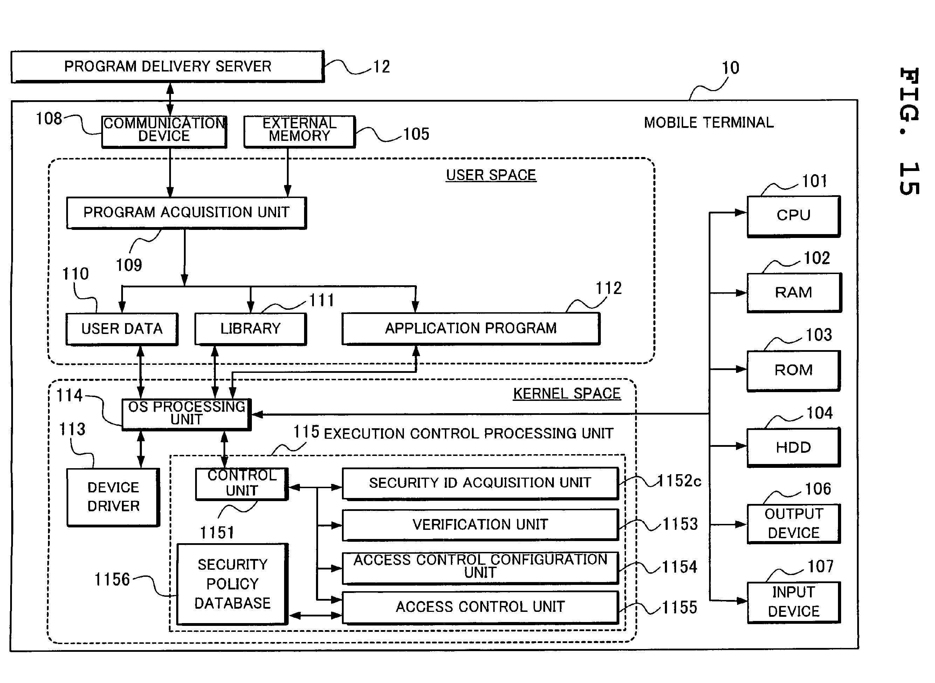

A sixth exemplary embodiment of the invention will now be described with reference to Figs. 14 and 15.

In the first to fifth exemplary embodiments, security domain information is embedded in application programs and/or an application package. In the sixth exemplary embodiment, security IDs are embedded in place of security domain information.

Fig. 14 is a block diagram of a program delivery server, which is the same as the program delivery server of the first exemplary embodiment (Fig. 2) except for the addition of a function to embed security IDs. The program delivery server of the sixth exemplary embodiment is indicated by the same reference number 12 as that of the first exemplary embodiment. From a comparison of Fig. 14 which shows the sixth exemplary embodiment with Fig. 2 which shows the structure of the program delivery server 12 of the first exemplary embodiment, it can be seen that the domain embedding unit 209 in Fig. 2 is removed and, instead, new functions, i.e. a security ID embedding unit 211 and a domain information security ID conversion unit 212, are added in Fig. 14.

The security ID embedding unit 211 has a function to embed a security ID in an application program. The domain information security ID conversion unit 212 holds a table as shown in Fig. 5 and has a function to convert the security domain information inputted into the program delivery server 12 into a security ID. If input into the program delivery server 12 is a security ID, not domain information, the domain information security ID conversion unit 212 does not perform anything.

The other functions in Fig. 14 are the same as those in the first exemplary embodiment. An example configuration of a mobile terminal related to Fig. 14 is shown in Fig. 15. From a comparison of Fig. 15 with Fig. 1 which shows the first exemplary embodiment, it can be seen that the security domain information acquisition unit 1152 in Fig. 1 is replaced with a security ID acquisition unit 1152c, so that security IDs, not security domain information, can be obtained in the sixth exemplary embodiment. The table shown in Fig. 5 is not needed by the mobile terminal 10 in Fig. 15.

The difference between the operation of the mobile terminal 10 when the application program has a security ID, instead of security domain information, embedded therein and its operation according to the first exemplary embodiment (Fig. 5) will be explained below. At steps S604 and S606 in Fig. 6, a security domain is extracted in the first exemplary embodiment, but instead, a security ID is extracted in the sixth exemplary embodiment. The process to "identity the security domain type to determine the security ID" at step S612 in Fig. 6 is not necessary in the sixth exemplary embodiment.

While, in the sixth exemplary embodiment, a technique in which a security ID, in place of security domain information, is embedded in the first exemplary embodiment has been described, this technique can also be adapted to the second to fifth exemplary embodiments.

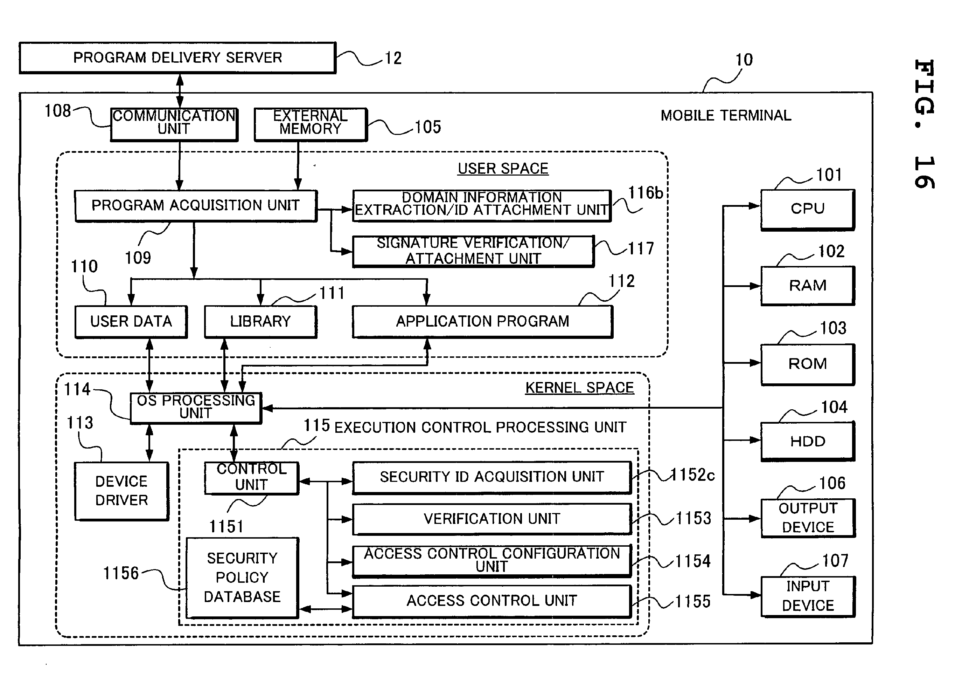

A seventh exemplary embodiment of the invention will now be described with reference to Fig. 16.

In the first to fifth exemplary embodiments, security domain information is embedded in application programs and/or an application package. In the sixth exemplary embodiment, security IDs are embedded in application programs and/or an application package in place of security domain information.

In the seventh exemplary embodiment, security domain information is embedded in an application package or application programs contained therein as in the second exemplary embodiment, and security IDs are embedded in the application programs when the application package is expanded.

Fig. 16 is a diagram which shows a configuration in which a mechanism to embed security IDs into application programs when an application package is expanded is added to the configuration of the second exemplary embodiment.

From a comparison of Fig. 16 with Fig. 7 related to the second exemplary embodiment, it can be seen that the domain information extraction/attachment unit 116 in Fig. 7 is replaced with a domain information acquisition /ID attachment unit 116b in Fig. 16.

The domain information extraction/ID attachment unit 116b attaches security IDs to application programs 112 after obtaining security domain information. To enable this processing, the table shown in Fig. 5 is managed by the domain information extraction/ID attachment unit 116b. Alternatively, the table shown in Fig. 5 may be placed at a location accessible from the domain information extraction/ID attachment unit 116b.

The operation performed on a mobile terminal 10 according to the seventh exemplary embodiment, in which security IDs, rather than security domain information, are embedded into application programs, will be explained in comparison with the operation of expanding an application package according to the second exemplary embodiment (see the flowchart in Fig. 9). According to the seventh exemplary embodiment, at step S912, the domain information extraction/ID attachment unit 116b obtains security IDs from the table shown in Fig. 5, based on the security domain information attached to the application package, and embeds the security IDs into each of the application programs 112. Then, at step S914, each of the application programs 112 embedded with a security ID is digitally signed.

The operation performed to execute an application program according to the seventh exemplary embodiment is the same as the second exemplary embodiment.

### (EXAMPLE 1)

The invention will further be explained by using an example.

In the description below, how an access control rule stored in a security policy database 1156 will be applied to an application program 112 in Fig. 1, based on the security domain information attached to the application program 112, will be explained concretely.

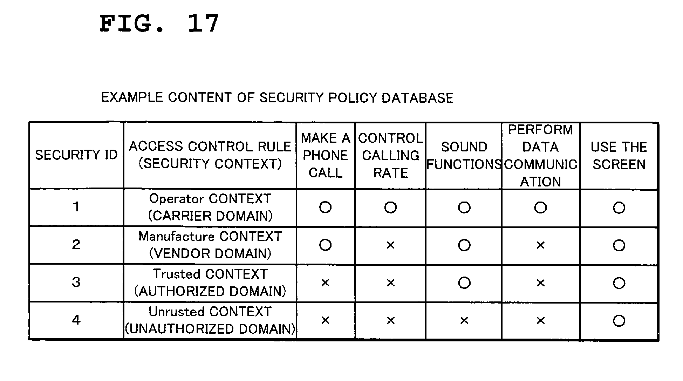

Fig. 17 is a diagram which shows a concrete configuration of the security policy database 1156 used in the example according to the invention. In this configuration, the security policy data is applied to a mobile terminal in a mobile communication system.

As an access control rule, the security policy database 1156 specifies, availability/non-availability of each function for each of the contexts: Operator, Manufacturer, Trusted and Untrusted.

For example, the application program whose security ID is "1" and which operates in the context of Operator can use the functions: "make a phone call," "control calling rate," "sound functions," "perform data communication" and "use the screen."

On the other hand, the application program whose security ID is "2" and which operates in the context of Manufacturer can use the functions: "make a phone call," "sound functions" and "use the screen." The functions "control calling rate" and "perform data communication" are not available to this application program.

Furthermore, the application program whose security ID is "3" and which operates in the context of Trusted can use the functions "sound functions" and "use the screen," but not the functions "make a phone call," "control calling rate" or "perform data communication."

Finally, the application program whose security ID is "4" and which operates in the context of Untrusted can use the function "use the screen" only. The function "make a phone call," "sound functions," "control calling rate" or "perform data communication" is not available to this application program.

Thus, by adopting this example according to the invention to a mobile terminal in a mobile communication system and by setting security policy data as described above to the security policy database 1156, it becomes possible to prevent an unauthorized application program (for example, the one which operates in the Untrusted context in the description above) from performing unauthorized operations (such as, making a phone call to specific telephone numbers, accessing specific websites, and so on).

Firstly, there is an effect that a security policy database previously provided in an information communication terminal does not have to be updated when a program is added to the terminal, and consequently that the necessity of a complex process of re-building the security policy database is eliminated. This is because access control rules within the security policy database are defined for a program to be added based on the security domain information attached to the program and then these rules are associated with the program.

Secondly, there is an effect that unauthorized operation or access can be prevented in an information communication terminal even when a program without security measures is executed. This is because security domain information is attached to the executable file of a program before the program is executed. As a result, when the program is executed, access by the program can be controlled for each of a plurality of functions within the terminal, based on the identity of the program obtained from the security domain information. In addition, since a "function access control unit" is realized at the OS (Operating System) level, the program can be operated through the existing system call interface provided natively in the OS. This leads to an effect that there is no need to modify the program itself. Moreover, if the invention is configured to be implemented on an OS, security can be ensured at the level of the OS. This further leads to another effect that security can be ensured for all the programs on a device running under this particular OS.

Thirdly, there is an effect that vulnerability to spoofing is minimized because security is ensured outside the address space during runtime of a program (process). The reason for this is that the "function access control unit" is realized at the OS level, as described above.

Fourthly, there is an effect that a program can be executed safely with a minimum amount of resources. This is because, instead of performing different access control on different programs, control information for each set of security domain information is held in a communication terminal and only security domain information is attached to a program. When the program is executed on the terminal, access control is realized based on the control information corresponding to the security domain information attached to the program. Therefore, it suffices to previously provide within the terminal as many control information sets as the number of security domain information sets.

Fifthly, there is an effect that, in order to ensure security within a communication terminal, the terminal itself can perform access control on any program appropriately according to the identity of the program. This is because a creator attaches to his/her program security domain information which indicates the security domain to which the program belongs, instead of resource information which indicates the resource to be used by the program; when the program is executed on a terminal, access control is realized based on the control information corresponding to the security domain information attached to the program. Moreover, in order to guarantee that the program has not been tampered with, a digital signature or a digital certificate is used as the security domain information.

Although cases where the invention is applied to mobile terminals used for mobile communication, etc. have been described above, applications of the invention are not limited to these, but the invention can also be applied to various other kinds of mobile and fixed information-related equipment which use application programs captured from external sources.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

### INCORPORATION BY REFERENCE

This application is based upon and claims the benefit of priority from Japanese patent application No. 2006-044053, filed on February 21, 2006, the disclosure of which is incorporated herein in its entirety by reference.

## Claims

1. A program execution control system which restricts functions available to each program operating on a computer by referencing security policy data for the program, comprising:
a first unit which determines a security domain associated with said program; and
a second unit which, based on said determined security domain and said security policy data, allows the program to operate normally only within the restriction specified for the security domain.

2. The program execution control system according to claim 1, wherein all or part of said first and second units are provided as units within the OS.

3. A program execution control system which restricts functions available to each program operating on a computer by referencing security policy data for the program, comprising:
a first unit which determines a security domain associated with said program; and
a second unit which sets access control by associating the information for said determined security domain with one of a plurality of function access types specified in said security policy data.

4. The program execution control system according to claim 3, wherein all or part of said first and second units are provided as units within the OS.

5. The program execution control system according to claim 3 or 4, wherein a verification unit which verifies whether or not a digital signature or digital certificate is attached to said program is further provided.

6. The program execution control system according to claim 5, wherein the determination of said security domain is performed by acquiring the security domain previously attached to said program.

7. The program execution control system according to claim 5, wherein the determination of said security domain is performed by verifying the certificate or signature previously attached to said program.

8. The program execution control system according to claim 5, wherein the determination of said security domain is performed by acquiring the identifier used within the security policy previously attached to said program.

9. The program execution control system according to claim 3, wherein a unit which has a function to extract the security domain information previously attached to a package consisting of a plurality of program and a function to attach said extracted security domain information to each of the plurality of programs contained in said package is further provided.

10. The program execution control system according to claim 9, wherein a unit which verifies whether or not a digital signature or digital certificate is attached to said package is further provided.

11. The program execution control system according to claim 10, wherein the determination of said security domain is performed by acquiring the security domain previously attached to said program.

12. The program execution control system of claim 10, wherein the determination of said security domain is performed by verifying the certificate or signature previously attached to said program.

13. The program execution control system according to claim 10, wherein the determination of said security domain is performed by acquiring the identifier used within the security policy previously attached to said program.

14. A program execution control method of restricting functions available to each program operating on a computer by referencing security policy data for the program, comprising:
a first process which determines said security domain associated with said program; and
a second unit which, based on said determined security domain and said security policy data, allows the program to operate normally only within the restriction specified for the security domain.

15. The program execution control method according to claim 14, wherein all or part of said first and second processes are provided as processes within the OS.

16. A program execution control method of restricting functions available to each program operating on a computer by referencing security policy data for the program, comprising:
a first process which determines said security domain associated with said program; and
a second unit which associates the information for said determined security domain with one of a plurality of function access types specified in said security policy data.

17. The program execution control method according to claim 16, wherein all or part of said first and second processes are provided as processes within the OS.

18. The program execution control method according to claim 16 or 17, wherein a process which verifies whether or not a digital signature or digital certificate is attached to said program is further provided.

19. The program execution control method of claim 18, wherein the determination of said security domain is performed by acquiring the security domain previously attached to said program.

20. The program execution control method according to claim 18, wherein the determination of said security domain is performed by verifying the certificate or signature previously attached to said program.

21. The program execution control method according to claim 18, wherein the determination of said security domain is performed by acquiring the identifier used within the security policy previously attached to said program.

22. The program execution control method according to claim 16, wherein a process which extracts the security domain information previously attached to a package consisting of a plurality of program and a process which attaches said extracted security domain information to each of the plurality of programs contained in said package are further provided.

23. The program execution control method according to claim 22, wherein a process which verifies whether or not a digital signature or digital certificate is attached to said package is further provided.

24. The program execution control method according to claim 23, wherein the determination of said security domain is performed by acquiring the security domain previously attached to said program.

25. The program execution control method according to claim 23, wherein the determination of said security domain is performed by verifying the certificate or signature previously attached to said program.

26. The program execution control method according to claim 23, wherein the determination of said security domain is performed by acquiring the identifier used within the security policy previously attached to said program.

27. A computer program, comprising a function of realizing the program execution control method of any one of claims 14 through 26.

28. A program delivery server, comprising a unit which, to a program to be operated on the execution control system of any one of claims 1 through 13, attaches information needed for the security domain to be determined on the execution control system.

29. A program delivery server, comprising a unit which, to a package containing a plurality of programs to be operated on the execution control system of any one of claims 9 through 13, attaches information needed for the security domains to be determined on the execution control system.

30. A program delivery method, comprising a process which, to a program to operate in accordance with the execution control method of any one of claims 14 through 21, attaches information needed for the security domain to be determined by the execution control method.

31. A program delivery method, comprising a process which, to a package containing a plurality of programs to operate in accordance with the execution control method of any one of claims 22 through 26, attaches information needed for the security domain to be determined by the execution control method.

32. A computer program, comprising a function of realizing the program delivery method of claims 30 or 32.
